(19) **Europäisches Patentamt**
**European Patent Office**
**Office européen des brevets**

(11) **EP 1 640 971 B1**

(12) **EUROPEAN PATENT SPECIFICATION**

(45) Date of publication and mention
of the grant of the patent:
**20.08.2008 Bulletin 2008/34**

(51) Int Cl.:
*G10L 21/02* [(2006.01)]      *H04R 3/00* [(2006.01)]

(21) Application number: **04022677.1**

(22) Date of filing: **23.09.2004**

(54) **Multi-channel adaptive speech signal processing with noise reduction**

Mehrkanalige adaptive Sprachsignalverarbeitung mit Rauschunterdrückung

Traitement adaptatif d'un signal de parole multicanaux avec suppression du bruit

(84) Designated Contracting States:
**AT BE BG CH CY CZ DE DK EE ES FI FR GB GR HU IE IT LI LU MC NL PL PT RO SE SI SK TR**

(43) Date of publication of application:
**29.03.2006 Bulletin 2006/13**

(73) Proprietor: **Harman Becker Automotive Systems GmbH**
**76307 Karlsbad (DE)**

(72) Inventors:
- **Buck, Markus**
  **88400 Biberach (DE)**
- **Haulick, Tim**
  **89143 Blaubeuren (DE)**
- **Hetherington, Phil**
  **V3H 5H7 Port Moody**
  **British Columbia (CA)**
- **Zakarauskas, Pierre**
  **c/o Harman Becker Automotive**
  **76307 Karlsbad (DE)**

(74) Representative: **Grünecker, Kinkeldey,**
**Stockmair & Schwanhäusser**
**Anwaltssozietät**
**Leopoldstrasse 4**
**80802 München (DE)**

(56) References cited:
- **MCCOWAN I A ET AL: "Adaptive parameter compensation for robust hands-free speech recognition using a dual beamforming microphone array" INTELLIGENT MULTIMEDIA, VIDEO AND SPEECH PROCESSING, 2001. PROCEEDINGS OF 2001 INTERNATIONAL SYMPOSIUM ON 2-4 MAY 2001, PISCATAWAY, NJ, USA,IEEE, 2 May 2001 (2001-05-02), pages 547-550, XP010544783 ISBN: 962-85766-2-3**
- **OH S ET AL: "Hands-free voice communication in an automobile with a microphone array" DIGITAL SIGNAL PROCESSING 2, ESTIMATION, VLSI. SAN FRANCISCO, MAR. 23, vol. VOL. 5 CONF. 17, 23 March 1992 (1992-03-23), pages 281-284, XP010058660 ISBN: 0-7803-0532-9**
- **GANNOT S ET AL: "SIGNAL ENHANCEMENT USING BEAMFORMING AND NONSTATIONARY WITH APPLICATIONS TO SPEECH" IEEE TRANSACTIONS ON SIGNAL PROCESSING, IEEE, INC. NEW YORK, US, vol. 49, no. 8, August 2001 (2001-08), pages 1614-1626, XP001200100 ISSN: 1053-587X**

**Description**

The present invention relates to speech signal processing with noise reduction. In particular, it relates to multi-channel speech signal processing.

Speech signal processing has often to be performed in a noisy background environment. A prominent example is hands-free voice communication in vehicles. In such hands-free communication, the microphone signals suffer from a relatively low Signal-to-Noise Ratio (SNR). Consequently, some noise reduction must be employed in order to improve the speech signal quality.

A paper by McCowan, I.A. and Sridharan, S., Adaptive Parameter Compensation for Robust Hands-Free Recognition Using a Dual Beamforming Microphone Array, Proceedings of 2001 International Symposium on Intelligent Multimedia, Video and Speech Processing, May 2 - 4 2001, Hong Kong, Piscataway, Nj, USA, IEEE, pages 547-550, discloses a fixed sub-array delay sum beamformer with different weights for different frequency ranges.

A usual method to improve the signal quality in distant talking speech acquisition is the utilization of multi-channel systems, i.e. microphone arrays, as described in "Microphone Arrays: Signal Processing Techniques and Applications", eds. Brandstein, M. and Ward, D., Springer, Berlin 2001.

Current multi-channel systems primarily make use of the so-called "General Sidelobe Canceller" (GSC), see, e.g., "An alternative approach to linearly constrained adaptive beamforming", by Griffiths, L.J. and Jim, C.W., IEEE Transactions on Antennas and Propagation, vol. 30., p.27, 1982. The GSC consists of two signal processing paths: a first (or lower) adaptive path with a blocking matrix and an adaptive noise cancelling means and a second (or upper) non-adaptive path with a fixed beamformer.

The fixed beamformer improves the signals pre-processed, e.g., by a means for time delay compensation using a fixed beam pattern. Adaptive processing methods are characterized by a permanent adaptation of processing parameters such as filter coefficients during operation of the system. The lower signal processing path of the GSC is optimized to generate noise reference signals used to subtract the residual is optimized to generate noise reference signals used to subtract the residual noise of the output signal of the fixed beamformer.

The lower signal processing means may comprise a blocking matrix that is used to generate noise reference signals from the microphone signals (e.g., "Adaptive beamforming for audio signal acquisition", by Herbordt, W. and Kellermann, W., in "Adaptive signal processing: applications to real-world problems", p.155, Springer, Berlin 2003). By means of these interfering signals, the residual noise of the output signal of the fixed beamformer can be subtracted applying some adaptive noise cancelling means that employs adaptive filters.

The focus in the design of current GSC lies on optimally suppressing noise by the lower path without distorting the output signal of the fixed beamformer. However, for the fixed beamformer hardly any optimization has been done so far. Rather, it is assumed that the speech signals only differ by some time delay and that both the speech signals and the noise signals show the same energy levels at each microphone of the microphone array.

For many practical applications, the SNR of different microphones of a microphone array differ from each other resulting in a degraded performance of the GSC. Channels with a low SNR may even deteriorate the performance of a non-optimized fixed beamformer instead of improving it. Actual GSC implementations, thus, do not work sufficiently reliable and are only of some practical use for microphone arrays consisting of omnidirectional microphones or directional microphones of the same type pointing in the same direction.

It is therefore the problem underlying the present invention to overcome the above-mentioned drawbacks and to provide a system and a method for speech signal processing and a hands-free system showing improved acoustic properties, in particular, a good Signal-To-Noise-Ratio (SNR), and being not too costly to implement.

The problem is solved by a system for speech signal processing with noise reduction according to Claim 1.

The inventive system for speech signal processing, in particular, optimization of the second signal processing means significantly improves the SNR of speech signals, e.g., in situations in which the speech signals and the noise signals does not show the same levels at each microphone of the microphone array. Such situations are common in practical applications, since, e.g., a) the distances between the speaker and the microphones may differ during the conversation and therefore different speech levels occur at the microphones, b) the noise field may be inhomogeneous and thus, different noise levels occur at the microphones, and c) the microphone array may consist of directional microphones pointing in different directions in space and thus, getting different noise and speech levels.

In order to synchronize the microphone signals corresponding to a desired target signal, the time delay of each signal has to be computed and compensated by the pre-processing means.

The second signal processing means comprises a beamformer. The beamformer according to the present invention is an adaptive weighted sum beamformer that combines the pre-processed, in particular, time delayed signals $X_{T,m}$ of $M$ microphones to obtain one output signal $Y_W$ with an improved SNR:

$$Y_w = \sum_{m=1}^{M} A_m \, X_{T,m}$$

The weights $A_m$ are not time-independent as in a conventional delay-and-sum-beamformer, but have to be recalculated repeatedly as is required, e.g., to maintain sensitivity in the desired direction and to minimize sensitivity in the directions of noise sources.

The first signal processing means should, in particular, be designed to estimate the noise reference signals as accurate as possible. These noise reference signals are used as input signals by an adaptive noise cancelling means that is well known from the art.

The adaptive noise cancelling means creates a noise signal to be subtracted from the output signal generated by the second signal processing means. The adaptive noise cancelling means can comprise adaptive filter being iteratively calculated, e.g., by means of the Normalized Least-Mean Square (NLMS) algorithm.

Advantageously, the means configured to generate the at least one noise reference-signal can comprise a non-adaptive or an adaptive blocking matrix.

Whereas a non-adaptive blocking matrix is technically easier to employ and also cheaper to produce, usage of an adaptive one improves significantly the reduction of speech signal portions in the noise reference signals. The blocking matrix can work by simply subtracting adjacent channels. In this case for each but one of the different channels, a reference noise signal is generated by means of the time delayed microphone signals.

Preferably, the pre-processing means may further comprise an adaptive self-calibration means configured to match the phases and amplitudes of the time delay compensated microphone signals. As in the case of the adaptive noise cancelling means, the adaptive filters of the adaptive self-calibration means can be calculated by means of the NLMS algorithm.

After time delay compensation the microphone signals may not be matched accurately due to, e.g., speaker movement and phase and amplitude mismatch of the different microphones. By the adaptive self-calibration, the mismatches with respect to phases and amplitudes are minimized. Accordingly, the desired signals in each of the channels are time (phase)-aligned, the amplitudes of the desired signal portions are almost equal in each of the channels and the signals are expected to exhibit very similar frequency characteristics.

Consequently, depending on the SNR required by the actual application it may be sufficient to employ a non-adaptive blocking matrix in the first signal processing means to obtain the at least one noise reference signal. However, an adaptive blocking matrix can be employed to improve the accuracy of the at least one noise reference signal.

According to a preferred embodiment of the present inventive system an adaptation control may be employed that is configured to control the adaptation of the adaptive processing means. These adaptive processing means may comprise the adaptive beamformer, the adaptive noise cancelling means and, when chosen to be an adaptive one, the blocking matrix.

Furthermore, the adaptation control can be configured to initiate adaptation in dependence on instantaneous SNR and/or whether speech is detected and/or whether the energy of a detected speech signal exceeds the energy of concurrently detected background noise by some predetermined value and/or the direction where acoustic signals are coming from.

It may be desirable to have the adaptation control to be configured to initiate adaptation of a first adaptive processing means depending on an adaptation of a second adaptive processing means, wherein the first and the second adaptive processing means are one of the adaptive beamformer, the adaptive blocking matrix and the adaptive noise cancelling means.

If, e.g., the weights used by the adaptive beamformer are adapted, it may be desirable to also adapt the adaptive blocking matrix, if applied, and/or the filters of the adaptive noise cancelling means.

Further, the pre-processing means and/or the first and/or the second processing means can be configured to perform the speech signal processing in the time domain or in the frequency domain or in the subband frequency domain.

The pre-processing means may include a means for performing a Fast Fourier Transform, if the following signal processing is to be done in the frequency space. At least partly processing in the full time domain might be realized in order to avoid Fourier transforms.

The microphone array of the inventive system may comprise at least one directional microphone. The microphone array, in particular, may comprise more than one directional microphones that are pointing in different directions as, e.g., a compact microphone array comprising at least two directional microphones pointing in different directions. Whereas conventional systems of speech signal processing that make use of fixed beamformers show relatively poor performance when applied to multiple microphones that are not orientated in the same direction, the present invention guarantees a high SNR, even if the microphones are directed in different directions.

According to one advantageous embodiment, the inventive system may comprise at least two sub-arrays. In this case, each sub-array can be optimized for a specific frequency band yielding an improved overall directivity and sensitivity.

Preferably, the inventive system can comprise a frame wherein each microphone of the microphone array is arranged in a predetermined, in particular fixed, position in or on the frame. This ensures that after manufacture of the frame with the microphones, the relative positions of the microphones are known.

The inventive system and method of improved speech signal processing with reduced noise is particularly useful for hands-free systems, since hands-free communication often is performed in a noise environment.

Furthermore, it is possible to use the previously described systems for speech signal processing and hands-free systems in a vehicle. An improved SNR is particularly desirable in the acoustically challenging contents of communication devices in vehicular cabins. If the microphone array is arranged in a frame according to the above mentioned embodiment, it can easily be mounted in a vehicular cabin.

Also, it is advantageous to use a vehicle comprising one of the above-described systems for speech signal processing and hands-free systems.

Furthermore, the present invention provides a method for speech signal processing with noise reduction as set forth in claim 12.

The at least one noise reference signal can be generated using a non-adaptive or an adaptive blocking matrix.

The pre-processing of the microphone signals may comprise adaptive self-calibrating the time delay compensated signals to match the phases and the amplitudes of these signals.

The adaptation of the adaptive processing steps, in particular, the adaptive beamforming, calculation of the blocking matrix, if chosen to be an adaptive one, and the adaptive noise cancelling, can be performed by some adaptation control means.

Furthermore, the controlling of the adaptation steps may comprise adapting a first adaptive processing means depending on an adaptation of a second adaptive processing means, wherein the first and the second adaptive processing means are one of the adaptive beamformer, the adaptive blocking matrix and the adaptive noise cancelling means.

Advantageously, the adaptation may be controlled in dependence on the instantaneous SNR and/or whether speech is detected and/or whether the energy of a detected speech signal exceeds the energy of concurrently detected background noise by some predetermined value and/or the direction where acoustic signals are coming from.

The pre-processing means and/or the first and/or the second processing means can perform processing in the time domain or in the frequency domain or in the subband frequency domain.

The invention further provides a computer program product, comprising one or more computer readable media having computer-executable instructions for performing the steps of the inventive method for speech signal processing with noise reduction as described above.

Additional features and advantages of the present invention will be described with reference to the drawings. In the description, reference is made to the accompanying figures that are meant to illustrate preferred embodiments of the invention. It is understood that such embodiments do not represent the full scope of the invention.

Figure 1 shows one embodiment of the speech signal processing means according to the present invention comprising an adaptive beamformer, a means configured to perform time delay compensation, a block matrix and an adaptive noise cancelling means.

Figure 2 shows another embodiment of the speech signal processing means similar to the one illustrated in Figure 1, but additionally comprising an adaptive self-calibration means.

Figure 3 shows selected steps of the inventive method for speech signal processing with noise reduction.

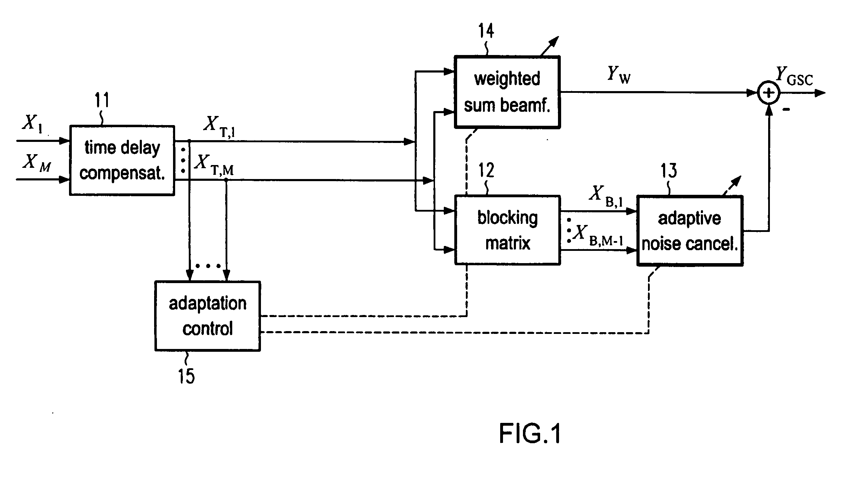

The general structure of one embodiment of the speech signal processing according to the present invention is illustrated in Figure 1. For illustration purposes, the processing is done in the subband domain is described. Alternatively, the algorithms could be applied in the full time domain.

The speech processing means illustrated in Figure 1 can be regarded as a generalized version of a GSC. According to the standard GSC method, however, there are two signal processing means or paths: one non-adaptive path (upper path, fixed beamformer) and one adaptive path (lower path, adaptive noise cancelling means). In this invention, it is proposed to also adapt the beamformer in the upper path.

A microphone array (not shown), mounted, e.g., inside a vehicle, detects speech signals. The detected microphone signals are pre-processed before noise reduction. The pre-processing may comprise a Fast Fourier Transform. The complex-valued microphone signals $X_1(n,k)$ to $X_M(n,k)$ in subband domains are subject to time delay compensation 11, where M denotes the number of microphones, and n and k the index of the frequency bin and the time index, respectively. For each microphone signal the time delay has to be computed and compensated, based, e.g., on the geometry of microphones, in order to synchronize the microphone signals corresponding to a desired target signal. The delays correspond to the acoustic time delays for sound travelling with sound velocity and coming from different directions and/or positions.

The time delayed signals $X_{T,1}$ to $X_{T,M}$ are further processed by two different signal processing means, i.e. they are input in two signal processing paths: a first (or lower) adaptive path with a blocking matrix 12 and an adaptive noise cancelling means 13 and a second (or upper) path with an adaptive weighted sum beamformer 14.

The noise levels of the signal portions in each channel usually differ from each other. By simply averaging the different channels (delay-and-sum-beamformer), channels with very low SNR may deteriorate the SNR of the output signal. Thus, it is desirable to introduce weighting coefficients (weights) for the different channels.

By applying a real-valued weight $A_m(n)$ to each channel $m$ in each subband $n$ prior to averaging, the SNR of the output signal $Y_w$

$$Y_w(n,k) = \sum_{m=1}^{M} A_m(n) X_{T,m}(n,k)$$

could, in principle, be maximized.

The following procedure allows for determining the weights $A_m(n)$. The input signals $X_{T,m}$ consist of signal portions $S_m(n,k)$ and noise portions $N_m(n,k)$, respectively:

$$\ddot{X}_{T,m}(n,k) = S_m(n,k) + N_m(n,k).$$

For simplicity, it is assumed that the signal portions only vary by positive real-valued scaling factors $\alpha_m$:

$$S_m(n,k) = \alpha_m(n) S(n,k).$$

The noise portions are assumed to be completely orthogonal to each other and may have different powers $\varepsilon$:

$$\varepsilon\{N_m(n,k) N_l(n,k)\} = 0 \quad for \ m \neq l$$
$$\varepsilon\{|N_m(n,k)|^2\} = \beta_m^2(n)\, \varepsilon\{|N(n,k)|^2\}$$

with $\beta_m$ being some positive real-valued number. The optimal weights for these assumptions can be calculated as (see "Beamforming: A Versatile Approach to Spatial Filtering", by Van Veen, B.D. and Buckley, K.M., IEEE ASSP Magazine, vol. 5, no.2, p.4, 1999):

$$\tilde{A}_m(n) = \frac{\alpha_m(n)}{\beta_m^2(n)}.$$

The weights should be normalized in order to get a unity response for the desired signal portions:

$$A_m(n) = \frac{\tilde{A}_m(n)}{\sum_{l=1}^{M} \tilde{A}_l(n)}.$$

In practical applications the numbers of $\alpha_m(n)$ and $\beta_m(n)$ may be time-dependent. Thus, it is necessary to track the temporal changes (e.g. by estimating the power of the noises $\varepsilon\{|N_m(n,k)|^2\}$ or ratios of the speech amplitudes in different channels). Consequently, the optimal weights $A_m(n,k)$ are also time variant and have to be recalculated repeatedly thereby making the beamformer to be an adaptive one.

The output signals of the adaptive weighted sum beamformer $Y_w(n,k)$ serves as an intermediate result. For this the SNR should be as good as possible, as it is achieved by the adaptive determination of the weights $A_m(n,k)$.

The blocking matrix 12 was designed to obtain noise reference signals. As little desired speech as possible should be present in these signals. In the simplest realization the blocking matrix performs a subtraction of adjacent channels.

Preferably, the blocking matrix 12 is of an adaptive kind. The input signals $X_{T,1}$ to $X_{T,M}$ are projected onto the "noise plane". $X_{B,1}$ to $X_{B,M-1}$ are the resulting noise reference signals output by the blocking matrix that ideally should block completely the desired or useful signal within the input signals. A Walsh-Hadamard kind of blocking matrix is generally preferred instead of a Griffiths-Jim blocking matrix, since more filters can be saved with a Walsh-Hadamard blocking matrix. On the other hand, the Walsh-Hadamard blocking matrix can be established for arrays consisting of $M = 2^n$ microphones only.

Preferably, the noise reference signals $X_{B,1}$ to $X_{B,M}$ are used as input signals for an adaptive noise cancelling means 13. The adaptive noise cancellation is done by (complex-valued) filters $H_{GSC,m}(n,k)$. These filters are adapted with the goal that the power of the output signal $\varepsilon\{|Y_{GSC,m}(n,k)|^2\}$ is minimized. Because the reference signals ideally contain no signal portions, the residual noise of the signal $Y_w(n,k)$ is reduced and thereby the SNR is increased.

For adaptation of the filters, the NLMS algorithm may be used which reads:

$$Y_{GSC}(n,k) = Y_w(n,k) - \sum_{m=1}^{M-1} X_{B,m}(n,k) H_{GSC,m}(n,k)$$

$$H_{GSC,m}(n,k+1) = H_{GSC,m}(n,k) + \frac{\beta_{GSC}(n,k)}{\sum_{l=1}^{M-1}\left|X_{B,l}(n,k)\right|^2} Y_{GSC,m}(n,k) X_{B,m}^{\bullet}(n,k).$$

where the asterisk denotes the complex conjugate of the noise reference signals. Accordingly, the noise reference signals and the filters $H_{GSC,m}(n,k)$ are used to generate a noise signal to be subtracted from the beamformed signal $Y_w$ output by the adaptive beamformer 14. The final output signal $Y_{GSC}$ obtained by this subtraction represents a highly purified speech signal allowing a better speech acquisition than known from the prior art.

The adaptation steps of the first and the second signal processing have to be controlled by an adaptation control 15. If the upper signal processing path is adapted, settings for the optimal solution of the lower signal processing path generally change. Therefore, the lower signal processing path has advantageously to be re-adapted.

In order to get no artefacts in the output signal, the adaptation steps have to be controlled carefully. The SNR-optimized weighted sum beamformer 14 may, preferably, only be adapted at instances where (speech) signal is present with sufficient energy over background noise. Advantageously, the adaptive noise cancelling means 13 may only be adapted when noise is present and no or almost no speech signals are detected.

To control the step sizes for the adaptation of the different units, several sources of information should be considered. For example, the step sizes may depend on SNR and/or on whether speech is detected and/or the direction from where the sound is coming from.

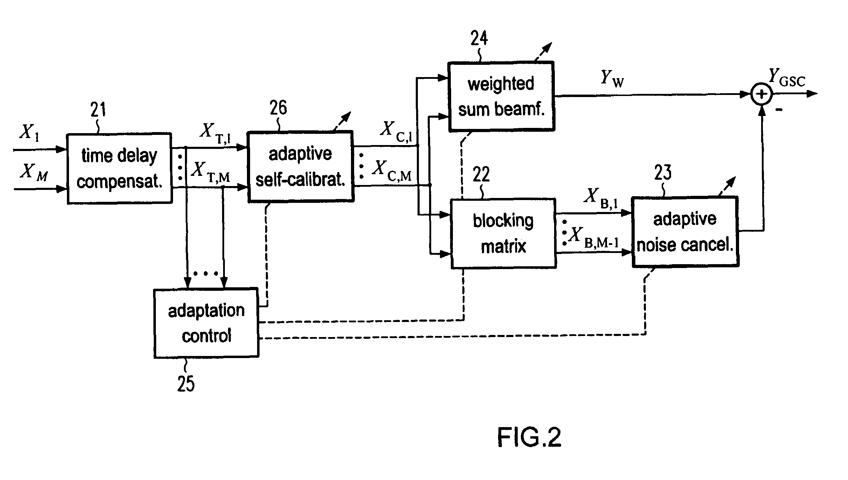

Figure 2 illustrates another embodiment of the inventive GSC. Here, the structure shown in Figure 1 is supplemented by an adaptive self-calibrating unit 26. The pre-processing means according to this embodiment comprises a time delay compensation 21 and an adaptive self-calibrating unit 26 for pre-processing the microphone inputs.

In practical applications, after time delay compensation the microphone signals are not matched yet in an optimal way. Some microphones may mismatch with regard to phases and amplitudes in the different channels, since speaker movement out of the desired direction and echoic room acoustics, as, e.g., reflections at boundaries, usually cause non-ideal conditions.

By the adaptive self-calibration unit 26, the mismatches of the different channels are minimized. This is done for phases and amplitudes. After that, the desired signal in each channel should be time aligned and should have very similar frequency characteristics.

One effective method for adaptive self-calibration is the following. The self-calibration filters $H_{C,m}(n,k)$ perform a matching of the signals in each channel as follows

$$X_{C,m}(n,k) = X_{T,m}(n,k) H_{C,m}(n,k)$$

$$E_{C,m}(n,k) = \frac{1}{M}\sum_{l=1}^{M} X_{C,l}(n,k) - X_{C,m}(n,k)$$

where $E_{C,m}(n,k)$ denotes the error signals. The (complex) filters $H_{C,m}(n,k)$ can again be adapted by the NLMS algorithm with the goal that the powers of the error signals $\varepsilon\{|E_{C,m}(n,k)|^2|\}$ are minimized:

$$\widetilde{H}_{C,m}(n,k+1) = \widetilde{H}_{C,m}(n,k) + \frac{\beta_C(n,k)}{|X_{T,m}(n,k)|^2} E_{C,m}(n,k) X^*_{T,m}(n,k)$$

The filters are then rescaled to get a unity mean response

$$H_{C,m}(n,k) = \widetilde{H}_{C,m}(n,k) - \frac{1}{M}\sum_{l=1}^{M} \widetilde{H}_{C,l}(n,k) + 1$$

with $(\frac{1}{M}\sum_{m=1}^{M} H_{C,m}(n,k) \underset{=}{!} 1)$.

The pre-processing means according to the embodiment shown in Figure 2 outputs the adaptively self-calibrated signals $X_{C,M}$ that are to be processed further by the first and second processing means (lower and upper processing path), in particular, by the blocking matrix 22 and the adaptive beamformer 24 according to this inventive embodiment.

The blocking matrix 22 can be a non-adaptive or an adaptive one. Since the input signals are adaptively self-calibrated before, depending on the actual applications a non-adaptive matrix might be regarded as being capable for generating noise reference signals of sufficient accuracy.

When an adaptive self-calibration unit 26 is applied, the adaptation should also be only performed, if speech signals are present with sufficient energy over background noise.

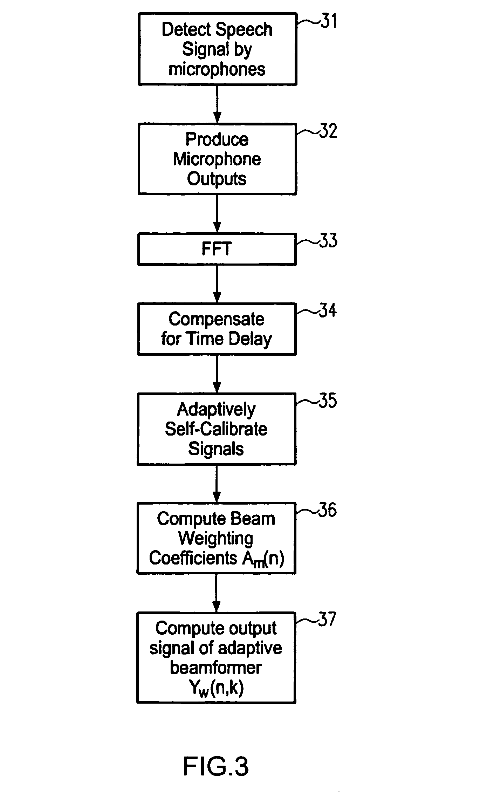

Figure 3 illustrates the functioning of selected steps of the inventive method for speech signal processing with noise reduction. At least two microphones detect a verbal utterance 31. In step 32 microphone outputs are generated, which then, are processed, e.g., in the frequency domain by passing the microphone outputs 32 through a Fast Fourier Transform 33, e.g., a 128-points transform per second. In the next step, time delay compensation is performed in the frequency space 34. This step might be the final one during pre-processing the microphone signals.

For many applications after time delay compensation the microphone signals are not matched sufficiently. Therefore, it is advantageous to minimize the mismatches of the multiple channels by adaptively self-calibrating the signals 35. Ideally, after that step of pre-processing the calibrated signals are phase-aligned with respect to the desired signal and the amplitudes of the desired signal portions are equal in each of the multiple channels.

The levels of the noise portions, in general, still differ from one channel to another. The calibrated signals are further processed by an adaptive beam former to obtain a beamformed signal with a maximized SNR. For this purpose the weighting coefficients (weights) $A_m(n)$ have to be calculated 36 to build the weighted sum of the different pre-processed input signals. Different from conventional delay-and-sum beamformers this calculation is performed time-dependently according to the present inventive method.

By means of the calculated weighting coefficients $A_m(n)$ the output signal of the adaptive beamformer $Y_w(n,k)$ is determined 37. This signal can be further processed by subtracting the noise portion by means of an adaptive noise cancelling means that works on the basis of noise reference signals for the different channels that are obtained by a blocking matrix (not shown). Eventually, the resulting signal is transformed back to the time domain by an Inverse Fast Fourier Transform.

All previously discussed embodiments are not intended as limitations but serve as examples illustrating features and advantages of the invention. It is to be understood that some or all of the above described features can also be combined in different ways.

**Claims**

1.  System for speech signal processing with noise reduction, comprising
    a microphone array comprising at least two microphones to detect microphone signals,
    a pre-processing means connected to the microphone array to receive microphone signals comprising means (11; 21) configured to perform a time delay compensation of the microphone signals to obtain pre-processed signals,
    a first signal processing means connected to the pre-processing means to receive the pre-processed signals comprising a means (12, 22) configured to generate at least one noise reference signal, in particular / one noise reference signal for each microphone signal,
    a second signal processing means connected to the pre-processing means to receive the pre-processed signals comprising an adaptive beamformer (14; 24) with time-dependently adapted weights to obtain a beamformed signal, and
    an adaptive noise cancelling means (13; 23) configured to reduce noise of the beamformed signal on the basis of the at least one noise reference signal.

2.  System according to Claim 1, wherein the means configured to generate the at least one noise reference signal comprises a non-adaptive or an adaptive blocking matrix (12; 22).

3.  System according to one of the preceding claims, wherein the pre-processing means further comprises an adaptive self-calibration means (26) configured to match the phases and amplitudes of the time delay compensated microphone signals.

4.  System according to one of the preceding claims, further comprising an adaptation control (15; 25) configured to control the adaptation of the adaptive processing means, in particular, the adaptive beamformer (14; 24) and the adaptive noise cancelling means (13; 23).

5.  System according to Claim 4, wherein the adaptation control (25) is configured to initiate adaptation of a first adaptive processing means depending on an adaptation of a second adaptive processing means, wherein the first and the second adaptive processing means are one of the adaptive beamformer (14; 24), the adaptive blocking matrix (12; 22) and the adaptive noise cancelling means (13; 23).

6.  System according to Claim 4 or 5, wherein the adaptation control (15; 25) is configured to initiate adaptation in dependence on instantaneous SNR and/or whether speech is detected and/or whether the energy of a detected speech signal exceeds the energy of concurrently detected background noise by some predetermined value and/or the direction where acoustic signals are coming from.

7.  System according to one of the above claims, wherein the pre-processing means and/or the first and/or the second processing means are configured to perform processing in the time domain or in the frequency domain or in the subband frequency domain.

8.  System according to one of the above claims, wherein the microphone array comprises at least one directional microphone, in particular, more than one directional microphone pointing in different directions.

9.  System according to one of the above claims, wherein the microphone array comprises at least two sub-arrays.

10. System according to one of the above claims, further comprising a frame wherein each microphone of the microphone array is arranged in a predetermined, in particular, fixed position in or on the frame.

11. Hands-free system comprising a system for speech signal processing with noise reduction according to one of the preceding claims.

12. Method for speech signal processing with noise reduction, comprising
    detecting microphone signals by a microphone array comprising at least two microphones,
    pre-processing the microphone signals, wherein the pre-processing comprises time delay compensating of the microphone signals to obtain pre-processed signals,
    using the pre-processed signals as input signals for a first signal processing and a second signal processing, wherein the first signal processing comprises generating at least one noise reference signal and the second signal processing comprises adaptive beamforming comprising time-dependent adaptation of the weights of an adaptive beamformer (14; 24) to obtain a beamformed signal, and
reducing noise of the beamformed signal based on the noise reference signals using an adaptive noise cancelling means (13; 23).

13. Method according to Claim 12, wherein the at least one noise reference signal is generated using a non-adaptive or an adaptive blocking matrix (12; 22).

14. Method according to one of the Claims 12 or 13, wherein the pre-processing of the microphone signals further comprises adaptive self-calibrating the time delay compensated signals to match the phases and the amplitudes of these signals.

15. The method of one of the Claims 12 - 14, further comprising controlling the adaptation of the adaptive processing steps, in particular, the adaptive beamforming and the adaptive noise cancelling.

16. The method of Claim 15, wherein controlling comprises adapting a first adaptive processing means depending on an adaptation of a second adaptive processing means, wherein the first and the second adaptive processing means are one of the adaptive beamformer (14; 24), the adaptive blocking matrix (12; 22) and the adaptive noise cancelling means (13; 23).

17. The method of one of the Claims 12 - 16, wherein the adaptation is controlled in dependence on the instantaneous SNR and/or whether speech is detected and/or whether the energy of a detected speech signal exceeds the energy of concurrently detected background noise by some predetermined value and/or the direction where acoustic signals are coming from.

18. The method of one of the Claims 12 - 17, wherein the pre-processing means and/or the first and/or the second processing means perform processing in the time domain or in the frequency domain or in the subband frequency domain.

19. Computer program product, comprising one or more computer readable media having computer-executable instructions for performing the steps of the method according to one of the Claims 12 - 18.

**Patentansprüche**

1. Ein System zur Sprachsignalverarbeitung mit Geräuschreduzierung, das umfasst:

eine Mikrofonanordnung, die zumindest zwei Mikrofone umfasst, um Mikrofonsignale zu detektieren;
eine Vorverarbeitungseinrichtung, die mit der Mikrofonanordnung verbunden ist, um Mikrofonsignale zu empfangen, und die eine Einrichtung (11; 21) umfasst, die dazu ausgebildet ist, eine Zeitverzögerungskompensation der Mikrofonsignale auszuführen, um vorverarbeitete Signale zu erhalten,
eine erste Signalverarbeitungseinrichtung, die mit der Vorverarbeitungseinrichtung verbunden ist, um die vorverarbeiteten Signale zu empfangen, und die eine Einrichtung (12; 22) umfasst, die dazu ausgebildet ist, zumindest ein Geräuschreferenzsignal, insbesondere ein Geräuschreferenzsignal für jedes Mikrofonsignal, zu erzeugen,
eine zweite Signalverarbeitungseinrichtung, die mit der Vorverarbeitungseinrichtung verbunden ist, um die vorverarbeiteten Signale zu empfangen, und die einen adaptiven Beamformer (14; 24) mit zeitabhängig adaptierten Gewichten umfasst, um ein gebeamformtes Signal zu erhalten, und
eine adaptive Geräuschunterdrückungseinrichtung (13; 23), die dazu ausgebildet ist, Geräusch des gebeamformten Signals auf der Grundlage des zumindest einen Gerauschreferenzsignals zu reduzieren.

2. System gemäß Anspruch 1, in dem die Einrichtung, die dazu ausgebildet ist, das zumindest eine Geräuschreferenzsignal zu erzeugen, eine nicht-adaptive oder eine adaptive Blockiermatrix (12; 22) umfasst.

3. System gemäß einem der vorhergehenden Ansprüche, in dem die Vorverarbeitungseinrichtung weiterhin eine adaptive Selbstkalibrierungseinrichtung (26) umfasst, die dazu ausgebildet ist, die Phasen und Amplituden der zeitverzögerungskompensierten Mikrofonsignale anzupassen.

4. System gemäß einem der vorhergehenden Ansprüche, das weiterhin eine Adaptionssteuerung (15; 25) umfasst, die dazu ausgebildet ist, die Adaption der adaptiven Verarbeitungseinrichtung, insbesondere des adaptiven Beamformers (14; 24) und der adaptiven Geräuschunterdrückungseinrichtung (13; 23), zu steuern.

5. System gemäß Anspruch 4, in dem die Adaptionssteuerung (25) dazu ausgebildet ist, eine Adaption einer ersten adaptiven Verarbeitungseinrichtung in Abhängigkeit von einer Adaption einer zweiten adaptiven Verarbeitungseinrichtung zu initiieren, wobei die erste und die zweite adaptive Verarbeitungseinrichtung der adaptive Beamformer (14; 24), die adaptive Blockiermatrix (12; 22) oder die adaptive Geräuschunterdrückungseinrichtung (13; 23) ist.

6. System gemäß Anspruch 4 oder 5, in dem die Adaptionssteuerung (15; 25) dazu ausgebildet ist, eine Adaption in Abhängigkeit von einem gegenwärtigen SNR und/oder davon, ob Sprache detektiert wird, und/oder davon, ob die Energie eines detektierten Sprachsignals die Energie des gleichzeitig detektierten Hintergrundgeräuschs um einen bestimmten Wert überschreitet, und/oder von der Richtung, aus der akustische Signale kommen, zu initiieren.

7. System gemäß einem der obigen Ansprüche, in dem die Vorverarbeitungseinrichtung und/oder die erste und/oder die zweite Verarbeitungseinrichtung dazu ausgebildet sind, eine Verarbeitung in dem Zeitregime oder in dem Frequenzregime oder in dem Teilband-Frequenzregime auszuführen.

8. System gemäß einem der obigen Ansprüche, in dem die Mikrofonanordnung zumindest ein Richtmikrofon, insbesondere mehr als ein Richtmikrofon, die in verschiedene Richtungen gerichtet sind, umfasst.

9. System gemäß einem der obigen Ansprüche, in dem die Mikrofonanordnung zumindest zwei Unteranordnungen umfasst.

10. System gemäß einem der obigen Ansprüche, das weiterhin einen Rahmen umfasst, wobei jedes Mikrofon der Mikrofonanordnung in einer vorbestimmten, insbesondere in einer festen, Position in oder auf dem Rahmen angeordnet ist.

11. Freisprechsystem, das ein System zur Sprachsignalverarbeitung mit Geräuschreduzierung gemäß einem der vorhergehenden Ansprüche umfasst.

12. Verfahren zur Sprachsignalverarbeitung mit Geräuschreduzierung, das umfasst
Detektieren von Mikrofonsignalen durch eine Mikrofonanordnung, die zumindest zwei Mikrofone umfasst,
Vorverarbeiten der Mikrofonsignale, wobei das Vorverarbeiten eine Zeitverzögerung umfasst, die die Mikrofonsignale kompensiert, um vorverarbeitete Signale zu erhalten,
Verwenden der vorverarbeiteten Signale als Eingangssignale für eine erste Signalverarbeitung und eine zweite Signalverarbeitung, wobei die erste Signalverarbeitung das Erzeugen zumindest eines Geräuschreferenzsignals umfasst und die zweite Signalverarbeitung ein adaptives Beamformen umfasst, welches eine zeitabhängige Adaption der Gewichte eines adaptiven Beamformers (14; 24), um ein gebeamformtes Signal zu erhalten, umfasst, und Reduzieren von Geräusch des gebeamformten Signals auf der Grundlage der Geräuschreferenzsignale unter Verwendung einer adaptiven Geräuschunterdrückungseinrichtung (13; 23).

13. Verfahren gemäß Anspruch 12, in dem das zumindest eine Geräuschreferenzsignal unter Verwendung einer nichtadaptiven oder einer adaptiven Blockiermatrix (12; 22) erzeugt wird.

14. Verfahren gemäß einem der Ansprüche 12 oder 13, in dem die Vorverarbeitung der Mikrofonsignale weiterhin das adaptive Selbstkalibrieren der zeitverzögerten kompensierten Signale, um die Phasen und die Amplituden dieser Signale anzupassen, umfasst.

15. Das Verfahren gemäß einem der Ansprüche 12 - 14, das weiterhin das Steuern der Adaption der adaptiven Verarbeitungsschritte, insbesondere des adaptiven Beamformens und der adaptiven Geräuschunterdrückung, umfasst

16. Das Verfahren von Anspruch 15, in dem das Steuern das Adaptieren einer ersten adaptiven Verarbeitungseinrichtung in Abhängigkeit von einer Adaption einer zweiten adaptiven Verarbeitungseinrichtung umfasst, wobei die erste und die zweite adaptive Verarbeitungseinrichtung der adaptive Beamformer (14; 24), die adaptive Blockiermatrix (12; 22) oder die adaptive Geräuschunterdrückungseinrichtung (13; 23) ist.

17. Das Verfahren von einem der Ansprüche 12 - 16, in dem die Adaption in Abhängigkeit von dem gegenwärtigen SNR und/oder davon, ob Sprache detektiert wird, und/oder davon, ob die Energie eines detektierten Sprachsignals die Energie des gleichzeitig detektierten Hintergrundgeräuschs um einen bestimmten Wert überschreitet, und/oder von der Richtung, aus der akustische Signale kommen, gesteuert wird.

18. Das Verfahren von einem der Ansprüche 12 -17, in dem die Vorverarbeitungseinrichtung und/oder die erste und/oder die zweite Verarbeitungseinrichtung eine Verarbeitung in dem Zeitregime oder in dem Frequenzregime oder in dem Teilband - Frequenzregime ausführt.

19. Computerprogrammprodukt, das ein oder mehrere computerlesbare Medien umfasst, die computerausführbare Anweisungen zum Ausführen der Schritte des Verfahrens gemäß einem der Ansprüche 12 - 18 aufweisen.

**Revendications**

1. Système de traitement d'un signal de parole avec une réduction du bruit, comprenant
un ensemble de microphones comprenant au moins deux microphones permettant de détecter des signaux de microphones,
un moyen de prétraitement relié à l'ensemble de microphones afin de recevoir des signaux de microphones comprenant un moyen (11; 21) configuré afin d'effectuer une compensation de retard temporel des signaux de microphones de façon à obtenir des signaux prétraités,
un premier moyen de traitement de signaux relié au moyen de prétraitement afin de recevoir les signaux prétraités comprenant un moyen (12, 22) configuré afin de générer au moins un signal de bruit de référence, en particulier un signal de bruit de référence pour chaque signal de microphone,
un second moyen de traitement de signaux relié au moyen de prétraitement afin de recevoir les signaux prétraités comprenant un formeur de faisceau adaptif (14; 24) ayant des pondérations adaptées en fonction du temps de façon à obtenir un signal formé en faisceau, et
un moyen d'annulation de bruit adaptif (13; 23) configuré afin de réduire le bruit du signal formé en faisceau sur la base dudit au moins un signal de bruit de référence.

2. Système selon la revendication 1, dans lequel le moyen configuré afin de générer ledit au moins un signal de bruit de référence comprend une matrice de blocage non adaptive ou adaptive (12; 22).

3. Système selon l'une des revendications précédentes, dans lequel le moyen de prétraitement comprend en outre un moyen d'auto-étalonnage adaptif (26) configuré afin d'adapter les phases et les amplitudes des signaux de microphones compensés en retard temporel.

4. Système selon l'une des revendications précédentes, comprenant en outre une commande d'adaptation (15; 25) configurée afin de contrôler l'adaptation du moyen de traitement adaptif, en particulier du formeur de faisceau adaptif (14; 24) et du moyen d'annulation de bruit adaptif (13; 23).

5. Système selon la revendication 4, dans lequel la commande d'adaptation (25) est configurée afin de déclencher l'adaptation d'un premier moyen de traitement adaptif en fonction d'une adaptation d'un second moyen de traitement adaptif, dans lequel le premier et le second moyens de traitement adaptifs sont l'un du formeur de faisceau adaptif (14; 24), de la matrice de blocage adaptive (12; 22) et du moyen d'annulation de bruit adaptif (13; 23).

6. Système selon la revendication 4 ou 5, dans lequel la commande d'adaptation (15; 25) est configurée afin de déclencher une adaptation en fonction d'un SNR instantané et/ou du fait qu'une parole est détectée et/ou du fait que l'énergie d'un signal de parole détecté dépasse l'énergie du bruit de fond simultanément détecté d'une certaine valeur prédéterminée et/ou la direction de laquelle proviennent les signaux acoustiques.

7. Système selon l'une des revendications ci-dessus, dans lequel le moyen de prétraitement et/ou le premier et/ou le second moyen de traitement est/sont configuré(s) afin d'effectuer un traitement dans le domaine temporel ou dans le domaine de fréquences ou dans le domaine de fréquences de sous-bande.

8. Système selon l'une des revendications ci-dessus, dans lequel l'ensemble de microphones comprend au moins un microphone directionnel, en particulier plus d'un microphone directionnel pointant dans différentes directions.

9. Système selon l'une des revendications ci-dessus, dans lequel l'ensemble de microphones comprend au moins deux sous-ensembles.

**10.** Système selon l'une des revendications ci-dessus, comprenant en outre un châssis dans lequel chaque microphone de l'ensemble de microphones est placé dans une position prédéterminée, en particulier dans une position fixe dans ou sur le châssis.

**11.** Système mains-libres comprenant un système de traitement d'un signal de parole avec une réduction du bruit selon l'une des revendications précédentes.

**12.** Procédé de traitement d'un signal de parole avec une réduction du bruit, comprenant
la détection de signaux de microphones par un ensemble de microphones comprenant au moins deux microphones,
le prétraitement des signaux de microphones, dans lequel le prétraitement comprend une compensation du retard temporel des signaux de microphones afin d'obtenir des signaux prétraités,
l'utilisation des signaux prétraités comme signaux d'entrée pour un premier traitement de signal et un second traitement de signal, dans lequel le premier traitement de signal comprend la génération d'au moins un signal de bruit de référence et le second traitement de signal comprend une formation de faisceau adaptif comprenant une adaptation des pondérations d'un formeur de faisceau adaptif (14; 24) en fonction du temps de façon à obtenir un signal formé en faisceau, et
la réduction du bruit du signal formé en faisceau sur la base des signaux de bruit de référence en utilisant un moyen d'annulation de bruit adaptatif (13; 23).

**13.** Procédé selon la revendication 12, dans lequel le signal de bruit de référence au moins est généré en utilisant une matrice de blocage non adaptive ou adaptive (12; 22).

**14.** Procédé selon l'une des revendications 12 ou 13, dans lequel le prétraitement des signaux de microphones comprend en outre un auto-étalonnage adaptif des signaux compensés en retard temporel afin d'adapter les phases et les amplitudes de ces signaux.

**15.** Procédé selon l'une des revendications 12 à 14, comprenant en outre le contrôle de l'adaptation des étapes de traitement adaptif, en particulier de la formation de faisceau adaptif et de l'annulation de bruit adaptif.

**16.** Procédé selon la revendication 15, dans lequel le contrôle comprend l'adaptation d'un premier moyen de traitement adaptif en fonction d'une adaptation d'un second moyen de traitement adaptif, dans lequel le premier et le second moyens de traitement adaptifs sont l'un du formeur de faisceau adaptif (14; 24), de la matrice de blocage adaptive (12; 22) et du moyen d'annulation de bruit adaptif (13; 23).

**17.** Procédé selon l'une des revendications 12 à 16, dans lequel l'adaptation est contrôlée en fonction du SNR instantané et/ou du fait qu'une parole est détectée et/ou du fait que l'énergie d'un signal de parole détecté dépasse l'énergie du bruit de fond simultanément détecté d'une certaine valeur prédéterminée et/ou la direction de laquelle proviennent les signaux acoustiques.

**18.** Procédé selon l'une des revendications 12 à 17, dans lequel le moyen de prétraitement et/ou le premier et/ou le second moyen de traitement effectue(nt) un traitement dans le domaine temporel ou dans le domaine de fréquences ou dans le domaine de fréquences de sous-bande.

**19.** Produit de programme informatique, comprenant un ou plusieurs support(s) lisible(s) par un ordinateur ayant des instructions exécutables par un ordinateur de façon à réaliser les étapes du procédé selon l'une des revendications 12 à 18.

FIG.1

FIG.2

EP 1 640 971 B1

Detect Speech Signal by microphones ~31

Produce Microphone Outputs ~32

FFT ~33

Compensate for Time Delay ~34

Adaptively Self-Calibrate Signals ~35

Compute Beam Weighting Coefficients $A_m(n)$ ~36

Compute output signal of adaptive beamformer $Y_w(n,k)$ ~37

FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MCCOWAN, I.A. ; SRIDHARAN, S.** Adaptive Parameter Compensation for Robust Hands-Free Recognition Using a Dual Beamforming Microphone Array. *Proceedings of 2001 International Symposium on Intelligent Multimedia, Video and Speech Processing,* 02 May 2001, 547-550

- **GRIFFITHS, L.J. ; JIM, C.W.** An alternative approach to linearly constrained adaptive beamforming. *IEEE Transactions on Antennas and Propagation,* 1982, vol. 30, 27
- **VAN VEEN, B.D. ; BUCKLEY, K.M.** Beamforming: A Versatile Approach to Spatial Filtering. *IEEE ASSP Magazine,* 1999, vol. 5 (2), 4